# EUROPÄISCHE PATENTSCHRIFT

(11) **EP 0 857 684 B1**
(45) Veröffentlichungstag und Bekanntmachung des Hinweises auf die Patenterteilung: **23.10.2002**
(21) Anmeldenummer: 98101061.4
(22) Anmeldetag: 22.01.1998
(51) Int. Cl.: B66B 1/34, B66B 5/00, G05B 19/12

(54) **Verfahren und Vorrichtung zum Installieren und Unterhalten von Steuerungen für Aufzugsanlagen**
Method and device for installation and maintenance of controllers for elevator systems
Méthode et dispositif pour installer et entretenir les contrôleurs d'installations d'ascenseurs

(30) Priorität: 10.02.1997 EP 97810073
(43) Veröffentlichungstag der Anmeldung: 12.08.1998
(73) Patentinhaber: INVENTIO AG, CH-6052 Hergiswil (CH)
(72) Erfinder: Gielis, Michel, 6600 Muralto (CH); Lindegger, Urs, 6594 Cantone (CH); Henneau, Philippe, 6004 Luzern (CH)

(56) Entgegenhaltungen:
- EP-A- 0 321 325
- EP-A- 0 615 945
- EP-A- 0 652 502

## Beschreibung

Die Erfindung betrifft ein Verfahren und eine Vorrichtung zum Installieren und Unterhalten von Steuerungen für Aufzugsanlagen.

Aus der EP 0 615 945 ist ein Verfahren zum Speichern und Anzeigen von Steuerungsdaten für Aufzugsanlagen bekanntgeworden. Bei diesem Verfahren wird eine Speicherkarte verwendet, die der Servicemonteur mit sich führt. Die Speicherkarte kann Daten wie Installationsdaten zum Konfigurieren des Aufzugs, Fehlermeldungstexte und Anweisungen zur Ausführung von Servicearbeiten, je nach Autoritätsgrad des Servicemonteurs, enthalten. Die Speicherkarte bleibt nicht permanent in der Anlage, sondern die erforderlichen Daten werden jeweils über ein Interface-Terminal von der Speicherkarte in die Anlage übertragen und nach Beenden der Arbeiten wird die Speicherkarte vom Servicemonteur wieder entfernt.

Beim vorstehend beschriebenen Verfahren muss der Servicemonteur für jede Anlage eine solche Speicherkarte mit sich führen, um bei der Installation einer Aufzugsanlage die individuellen Daten für einen Aufzug zu übertragen. Um die Speicherkarte überhaupt handhaben zu können, ist in jeder Aufzugssteuerung ein kostenintensives Interface-Terminal vorzusehen, um die Karte zu bedienen. Auch mit Verwendung dieser Karte ist vor Ort eine individuelle Anpassung kundenspezifischer Anforderungen an die jeweilige Anlage notwendig.

Der Erfindung liegt die Aufgabe zugrunde, ein Verfahren und eine Vorrichtung zum Installieren und Unterhalten von Steuerungen für Aufzugsanlagen der eingangs genannten Art vorzuschlagen, welche die vorgenannten Nachteile nicht aufweist und welche ein einfaches und kostengünstiges Konfigurieren der Aufzugsanlage ermöglicht.

Diese Aufgabe wird durch die im Patentanspruch 1 gekennzeichnete Erfindung gelöst.

Die durch die Erfindung erreichten Vorteile sind im wesentlichen darin zu sehen, dass eine Speicherkarte bei Inbetriebnahme des Aufzugs vor Ort in die Steuerung eingesetzt wird, die bereits alle anlagenspezifischen Daten und Optionen enthält, so dass eine zeitaufwendige Konfiguration nicht mehr notwendig ist.

Durch die in den Unteransprüchen aufgeführten Massnahmen sind vorteilhafte Weiterbildungen und Verbesserungen des im Anspruch 1 angegebenen Verfahrens und der Vorrichtung zum Installieren und Unterhalten von Steuerungen für Aufzugsanlagen möglich. Ausser dem Einbringen von Aufzugsdaten kann die Speicherkarte weitere Funktionen erfüllen, beispielsweise kann die Speicherkarte einen Fahrtenzähler beinhalten der nach Ablauf einer vorgegebenen Anzahl Fahrten einen Wartungsdienst verlangt. Zudem ist die verwendete Speicherkarte sehr kostengünstig. Weiter kann durch die Verwendung einer Identifikationsnummer die Anlage beziehungsweise die Speicherkarte sehr einfach gegen Missbrauch geschützt werden.

In der Zeichnung ist ein Ausführungsbeispiel der Erfindung dargestellt und im folgenden näher erläutert.
Es zeigen:
- Fig.1: eine Speicherkarte,
- Fig.2: ein Gerät zur Programmierung der Speicherkarte,
- Fig.3: eine schematische Darstellung eines Teils der Steuerung einer Aufzugsanlage mit eingesetzter Speicherkarte, und
- Fig.4: eine Vorrichtung zum Festhalten der Speicherkarte auf einem Steuerungsprint.

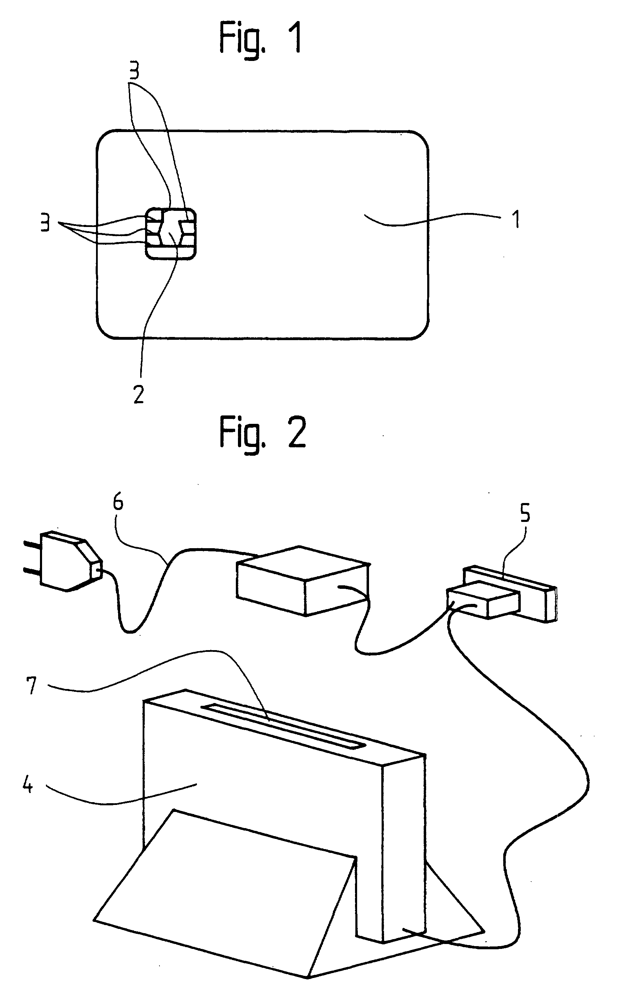

Fig.1 zeigt eine Speicherkarte 1 mit darauf angeordnetem Speicherelement 2. Die Speicherkarte 1 kann beispielsweise im Kreditkartenformat oder auch kleiner oder grösser ausgeführt sein. Das Speicherelement 2 enthält die gesamte Software zur Steuerung der Aufzugsanlage. Das Speicherelement 2 ist mit Kontakten 3 versehen, über die der Inhalt des Speichers gelesen oder beschrieben werden kann. Bereits bei der Bestellung einer Aufzugsanlage kann die Speicherkarte 1 im Werk mit der notwendigen Steuerungs- bzw. Konfigurationssoftware versehen werden, so dass eine zeitaufwendige Konfiguration der Anlage vor Ort nicht mehr notwendig ist.

Fig.2 zeigt ein Gerät 4 zur Programmierung der Speicherkarte 1. Dieses Programmierungsgerät 4 kann einfach über eine Schnittstelle 5 an einen handelsüblichen PC angeschlossen werden. Das Programmierungsgerät 4 kann entweder über ein Kabel 6 direkt vom Netz gespeist oder mittels Batterien betrieben werden. Die Speicherkarte 1 wird anschliessend in einen Schlitz 7 des Programmierungsgerätes 4 geschoben. Danach kann das Speicherelement 2 über das Programmierungsgerät 4 mittels PC bearbeitet werden.

Die Aufzugssteuerung kann somit auf sehr einfache Art und Weise den Kundenanforderungen gerecht werden. Bei nachträglich gewünschten, zusätzlichen Steuerungsoptionen oder im Falle einer Modernisierung wird nur die Speicherkarte 1 durch eine, die neuen Steuerungsdaten enthaltende Speicherkarte 1 ersetzt. Ebenso wird im Speicherelement 2 der Speicherkarte 1 eine Identifikationsnummer eingeschrieben, die mit der Identifikationsnummer der zugehörigen Aufzugsanlage übereinstimmen muss um die Anlage in Betrieb nehmen zu können. Sämtliche mit der Steuerung kommunizierenden Anlagenteile, wie Bedienungstableaus, Türantriebe, Lastmessungseinrichtungen, usw., sind mit dieser Identifikationsnummer versehen, die von der Speicherkarte 1 überprüft werden. Jede Speicherkarte 1 kann dadurch nur für eine einzige Aufzugsanlage verwendet werden, was einen Missbrauch der Karten 1 ausschliesst.

Weiter ist es möglich, die Speicherkarte 1 zusätzlich als Überwachungsmittel einzusetzen. Beispielsweise kann die Speicherkarte 1 einen Fahrtenzähler enthalten, wobei nach Ablauf einer vorbestimmten Anzahl Fahrten automatisch ein Wartungsdienst verlangt wird. Bei Durchführung des Wartungsdienstes kann einfach eine neue Speicherkarte 1 mit unbenutztem Fahrtenzähler eingesetzt werden.

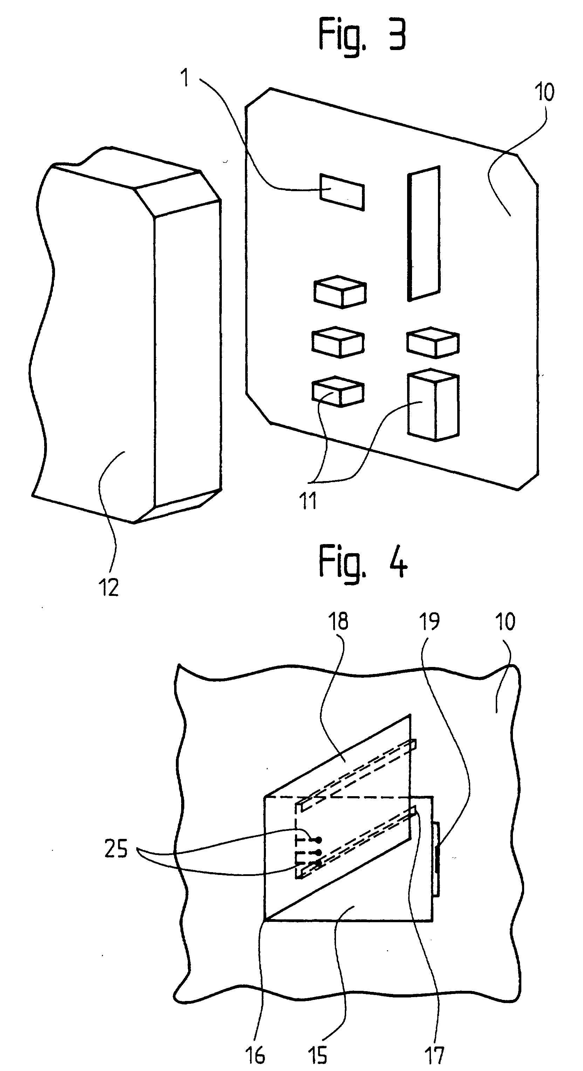

Fig.3 zeigt eine schematische Darstellung eines Teils der Steuerung einer Aufzugsanlage mit der Speicherkarte 1. Ein Steuerungsprint 10 beinhaltet die Steuerungselektronik 11 mit einer Vielfalt von Funktionen und ist während des Betriebs mit einer Abdeckung 12 geschützt. Während der Inbetriebnahme der Aufzugsanlage wird die Speicherkarte 1 im Steuerungsprint 10 eingesetzt. Zu diesem Zeitpunkt enthält die Speicherkarte 1 bereits alle notwendigen Steuerungsdaten. Diese Steuerungsdaten umfassen anlagespezifische Daten wie Gruppensteuerung oder Aufzugssteuerung, Antriebssteuerung, Anzahl Stockwerke, gewünschte Sonderfunktionen wie VIP-Betrieb, Brandschutzsystem oder Energiesparmodus, Behindertensteuerung usw.. Während des Betriebs der Anlage bleibt die Speicherkarte 1 permanent in der Anlage bzw. auf dem Steuerungsprint 10 und wird nur bei Änderungen in der Steuerung oder nach Ablauf des Fahrtenzählers durch eine neue Speicherkarte 1 ersetzt. Ohne Speicherkarte 1 ist der Aufzug nicht funktionsfähig. Gewünschte Sonderfunktionen und Optionen werden durch die Speicherkarte 1 aktiviert. Neben der Anbringung der Speicherkarte 1 direkt auf dem Steuerungsprint 10 kann sie auch an anderen Stellen des Aufzugs angebracht sein und mit dem Steuerungsprint 10 verbunden werden.

Fig.4 zeigt einen Klapprahmen 15 zum Festhalten der Speicherkarte 1 auf dem Steuerungsprint 10. Dieser Klapprahmen 15 weist einseitig ein Gelenk 16 auf, so dass er geöffnet werden kann. In offenem Zustand wird nun die Speicherkarte 1 mit Hilfe einer Führung 17 in einen oberen Rahmenteil 18 des Klapprahmens 15 eingeführt und in der Führung 17 gehalten. Danach wird der Klapprahmen 15 wieder geschlossen. In geschlossenem Zustand wird der obere Rahmenteil 18 beispielsweise mit einem Schnappverschluss 19 am Klapprahmen 15 festgehalten. Auf dem Klapprahmen 15 sind Kontaktzungen 25 (In der Figur gestrichelt gezeichnet) angeordnet, die bei geschlossenem Klapprahmen 15 die elektrische Verbindung zwischen den Kontakten 3 des Speicherelementes 2 und der Steuerungselektronik 11 auf dem Steuerungsprint 10 gewährleisten. Diese Art der Befestigung gewährleistet nicht nur eine sehr gute elektrische Verbindung zwischen den Zungenkontakten 25 und den Kontakten 3 des Speicherelementes 2, die Speicherkarte 1 lässt sich zudem jederzeit auf einfache Weise und ohne Verwendung von Werkzeugen auswechseln.

## Patentansprüche

1. Verfahren zum Installieren und Unterhalten von Steuerungen für Aufzugsanlagen, wobei die Konfigurierung der Steuerung nach der Installierung der Aufzugsanlage mittels einer die Steuerungsdaten enthaltenden Speicherkarte (1) erfolgt,
**dadurch gekennzeichnet,**
**dass** die Speicherkarte (1) ein Speicherelement (2) mit für die Funktion der Aufzugsanlage notwendigen Steuerungsdaten enthält und an einen Steuerungsprint (10) im Steuerungsteil der Aufzugsanlage festgehalten wird oder an anderen Stellen des Aufzugs angebracht und mit dem Steuerprint (10) verbunden wird und dass die Speicherkarte (1) nach dem Einsetzen während des Betriebs permanent mit dem Steuerungsprint (10) verbunden bleibt, wobei der Aufzug ohne Speicherkarte (1) nicht Funktionsfähig ist.

2. Verfahren nach Anspruch 1,
**dadurch gekennzeichnet,**
**dass** die Speicherkarte (1) im Speicherelement (2) ausser den Daten zur Steuerung der Aufzugsanlage eine Identifikationsnummer enthält, die mit der Identifikationsnummer der Aufzugsanlage bzw. der Anlagenteile übereinstimmt.

3. Vorrichtung zum Installieren und Unterhalten von Steuerungen für Aufzugsanlagen, wobei die Konfigurierung der Steuerung nach der Installierung der Aufzugsanlage mittels einer die Steuerungsdaten enthaltenden Speicherkarte (1) erfolgt,
**dadurch gekennzeichnet,**
**dass** an einem Steuerungsprint (10) im Steuerungsteil der Aufzugsanlage die ein Speicherelement (2) enthaltende Speicherkarte (1) mit für die Funktion der Aufzugsanlage notwendigen Steuerungsdaten während des Betriebs der Aufzugsanlage permanent angeordnet ist, wobei der Aufzug ohne Speicherkarte (1) nicht Funktionsfähig ist.

4. Vorrichtung nach Anspruch 3,
**dadurch gekennzeichnet,**
**dass** die Speicherkarte (1) auswechselbar ist.

5. Vorrichtung nach Anspruch 3 oder 4,
**dadurch gekennzeichnet,**
**dass** das Speicherelement (2) einen Fahrtenzähler beinhaltet.

## Claims

1. Method for installation and maintenance of controls for lift installations, wherein the configuring of the control is carried out after the installing of the lift installation by means of a storage card (1) containing the control data, **characterised in that** the storage card (1) comprises a storage element (2) with control data necessary for the function of the lift installation and is secured to a control print (10) in the control part of the lift installation or mounted at other positions of the lift and connected with the control print (10) and that the storage card (1) after insertion remains permanently connected with the control print (10) during the operation, wherein the lift is not functionally capable without the storage card (1).

2. Method according to claim 1, **characterised in that** the storage card (1) contains in the storage element (2) in addition to the data for control of the lift installation an identification number which corresponds with the identification number of the lift installation or of the installation parts.

3. Device for installation and maintenance of controls for lift installations, wherein the configuring of the control is carried out after the installing of the lift installation by means of a storage card (1) containing the control data, **characterised in that** the storage card (1), which comprises a storage element (2) with control data necessary for the function of the lift installation, is permanently arranged at a control print (10) in the control part of the lift installation during the operation of the lift installation, wherein the lift is not functionally capable without the storage card (1).

4. Device according to claim 3, **characterised in that** the storage card (1) is exchangeable.

5. Device according to claim 3 or 4, **characterised in that** the storage element (2) contains a journey recorder.

## Revendications

1. Procédé pour installer et entretenir des commandes pour installations d'ascenseurs, selon lequel la configuration de la commande se fait après l'installation de l'installation d'ascenseur à l'aide d'une carte mémoire (1) qui contient les données de commande,
**caractérisé en ce que** la carte mémoire (1) contient un élément de mémoire (2) avec des données de commande nécessaires au fonctionnement de l'installation d'ascenseur et est maintenue dans la partie de commande de l'installation d'ascenseur sur un circuit imprimé de commande (10) ou est fixée à d'autres endroits de l'ascenseur en étant reliée au circuit imprimé de commande (10), et **en ce que** la carte mémoire (1), après sa mise en place, reste reliée en permanence au circuit imprimé de commande (10), pendant le fonctionnement, étant précisé que sans carte mémoire (1), l'ascenseur ne peut pas fonctionner.

2. Procédé selon la revendication 1, **caractérisé en ce que** la carte mémoire (1) contient dans l'élément de mémoire (2), en plus des données pour la commande de l'installation d'ascenseur, un numéro d'identification qui correspond au numéro d'identification de l'installation d'ascenseur ou des éléments de l'installation.

3. Dispositif pour installer et entretenir des commandes pour installations d'ascenseur, la configuration de la commande se faisant après l'installation de l'installation d'ascenseur à l'aide d'une carte mémoire (1) qui contient les données de commande,
**caractérisé en ce que** la carte mémoire (1) qui contient un élément de mémoire (2) avec des données de commande nécessaires au fonctionnement de l'installation d'ascenseur est disposée en permanence, pendant le fonctionnement de ladite installation d'ascenseur, dans la partie de commande de l'installation d'ascenseur sur un circuit imprimé de commande (10), étant précisé que sans carte mémoire (1), l'ascenseur ne peut pas fonctionner.

4. Dispositif selon la revendication 3, **caractérisé en ce que** la carte mémoire (1) est échangeable.

5. Dispositif selon la revendication 3 ou 4, **caractérisé en ce que** l'élément de mémoire (2) contient un compteur de trajets.
